# EUROPÄISCHE PATENTSCHRIFT

(11) **EP 2 641 924 B1**
(45) Veröffentlichungstag und Bekanntmachung des Hinweises auf die Patenterteilung: **02.05.2018**
(21) Anmeldenummer: 13158579.6
(22) Anmeldetag: 11.03.2013
(51) Int. Cl.: C08G 18/62, C08G 18/79, C08G 18/80, C09D 175/04, C08G 18/28, C09D 133/06

(54) **Nicht wässriges, bei Umgebungstemperatur härtendes Beschichtungsmittel**
Non-aqueous coating agent which hardens at room temperature
Agent de revêtement non aqueux, durcissant à température ambiante

(30) Priorität: 19.03.2012 DE 102012204298
(43) Veröffentlichungstag der Anmeldung: 25.09.2013
(73) Patentinhaber: Evonik Degussa GmbH, 45128 Essen (DE)
(72) Erfinder: Lomoelder, Rainer, 48153 Münster (DE); Raukamp, Andre, 45772 Marl (DE); Naumann, Sabine, 44651 Herne (DE)

(56) Entgegenhaltungen:
- EP-A1- 1 624 027
- EP-A2- 1 273 640
- US-A1- 2010 297 355

## Beschreibung

Die vorliegende Erfindung betrifft ein Beschichtungsmittel enthaltend eine Vernetzerkomponente und eine Katalysatorkomponente, wobei das Beschichtungsmittel bereits bei Temperaturen von 10 bis 80 °C härtet, die Verwendung der Beschichtungsmittel und Beschichtungszusammensetzungen enthaltend diese.

Zur dauerhaft schützenden Beschichtung von wärmeempfindlichen Substraten werden heute in der Regel 2-Komponenten-Lacke eingesetzt, die bereits bei Umgebungstemperatur aushärten können. Sie bestehen aus Lackharzen mit funktionellen Gruppen und Vernetzern, die bereits bei Umgebungstemperatur mit diesen funktionellen Gruppen unter Vernetzung reagieren. Aufgrund ihrer hohen Reaktivität besitzen diese Vernetzer häufig ein intrinsisches toxikologisches Gefährdungspotential für den Menschen. Daher besteht der Wunsch, alternative Beschichtungssysteme bereit zu stellen, die ein vergleichbar breites Anwendungsspektrum besitzen, bei gleichzeitig hoher Beständigkeit der ausgehärteten Beschichtungen gegen Chemikalien- oder Witterungseinflüsse aber auch gegen mechanische Beanspruchung. Als technische Benchmark sind die seit langem bekannten aliphatischen 2K-PUR Systeme heranzuziehen.

Eine mögliche Alternative stellen Beschichtungssyteme auf Basis organofunktioneller Silane dar, die sich nach Wärmehärtung als sehr leistungsfähig erwiesen haben, so dass sie bereits für die Automobilerstlackierung eingesetzt werden.

In EP-549 643, WO 92/11327, WO 92/11328 und US-5,225,248 ist die Verwendung silangruppenhaltiger Harze in nichtwässrigen, wärmehärtenden Klarlacken für die Automobilerstlackierung, bei der üblicherweise Härtungstemperaturen oberhalb von 120 °C zum Einsatz kommen, beschrieben. Da in der Automobillackierung an das Reaktivitätsprofil grundsätzlich andere Anforderungen gestellt werden als bei der Umgebungstemperaturtrocknung, sind die dort genannten Katalysatoren und deren Konzentrationen für die Härtung unterhalb von 80 °C ungeeignet.

Teilsilanisierte Polyisocyanate für kratzfeste Klarlacke sind aus der EP-A 1273640 bekannt. Diese müssen über freie NCO-Gruppen verfügen, damit eine ausreichend schnelle Härtung erfolgen kann. Ferner werden die dort beschriebenen Vernetzer in wärmehärtenden Beschichtungen für die Automobillackierung verwendet, das heißt es werden Härtungstemperaturen von über 120 °C eingesetzt. Die beanspruchte Verwendung von blockierten Sulfonsäurekatalysatoren, die ihre Aktivität erst oberhalb von 100 °C entfalten, ist daher für die Härtung bei Temperaturen unterhalb von 80 °C ungeeignet.

In der technischen Literatur sind verschiedene Katalyseprinzipien zur Beschleunigung der Aushärtung von silanhaltigen Reaktivsystemen beschrieben.

In DE 102004050747 A1 werden Katalysatoren vom Lewis-Säure-Typ offenbart. So werden als Katalysatoren für die Vernetzung der Silanfunktionalitäten Lewis-Säuren (Elektronenmangelverbindungen), wie beispielsweise Zinnnaphtenat, Zinnbenzoat, Zinnoctoat, Zinnbutryrat, Dibutylzinndilaurat, Dibutylzinndiacetat, Dibutylzinnoxid, Bleioctoat eingesetzt. Dabei werden als Katalysatoren weiterhin bevorzugt Metallkomplexe mit Chelatliganden verwendet. Bei den Chelatliganden bildenden Verbindungen handelt es sich um organische Verbindungen mit mindestens zwei funktionellen Gruppen, die an Metallatome oder -ionen koordinieren können. Üblicherweise handelt es sich bei diesen funktionellen Gruppen um Elektronendonatoren, welche Elektronen an Metallatome oder -ionen abgeben. Diese Katalysatoren sind aufgrund ihres Schwermetallcharakters häufig toxikologisch bedenklich und sind insbesondere jedoch nicht ausreichend aktiv, um eine schnelle Aushärtung bei Umgebungstemperatur zu gewährleisten.

Lewis-Säure-Typen oder auch Sulfon- oder Phosphorsäurekatalysatoren sind die üblicherweise in der Silantechnologie benutzten und beschriebenen Katalysatoren.
Es zeigte sich jedoch in Versuchen, dass die genannten Katalysatoren für die Umgebungstemperaturhärtung nicht geeignet sind.

In EP 1 624 027 werden Kombinationen aus Metallcarboxylaten oder organischen Carbonsäuren und Heteroatom-haltigen Silanen zur Katalyse der Aushärtung von Dimethoxysilan-basierten Dichtmassen beschrieben. In diesem Fall werden jedoch flüssige, niedrigviskose Carbonsäuren mit einem besonders bevorzugten Schmelzpunkt von -40 bis +35 °C beansprucht und in sämtlichen Beispielen mit Aminen kombiniert, das heißt, sie werden in neutralisierter Form verwendet. Inwieweit dieses Prinzip von hoch elastischen Dichtmassen auf hoch vernetzte Beschichtungssysteme übertragbar ist, wird nicht offenbart und erschließt sich dem Fachmann nicht.

US 4,863,520 beschreibt die Verwendung von Tetralkylammoniumcarboxylaten in sogenannten Sol-Gel-Systemen basierend auf Umsetzungsprodukten von kolloidalen Kieselsäuren, Alkyltrialkoxysilanen und Wasser. Allerdings werden in der US-Schrift Tetralkylammoniumcarboxylate zur Kondensation der Silanol-gruppen verwendet, die sich durch die Hydrolyse der Silane gebildet haben. Bevorzugt werden diese Systeme bei Temperaturen oberhalb von 80 °C, bevorzugt oberhalb von 100 °C gehärtet. Eine Härtung bei niedrigeren Temperaturen wird nicht offenbart.

Aufgabe der vorliegenden Erfindung ist die Bereitstellung eines nicht-wässrigen Beschichtungsmittels auf Basis organofunktioneller Silane, das bereits bei Temperaturen im Bereich von 10 °C bis 80 °C ausgehärtet werden kann und im ausgehärteten Zustand zu Beschichtungen mit hoher mechanischer Beständigkeit, insbesondere der Kratzbeständigkeit, führt.

Diese Aufgabe wird durch die erfindungsgemäßen Beschichtungsmittel gelöst.

Gegenstand der vorliegenden Erfindung sind somit nicht wässrige Beschichtungsmittel, welche vorzugsweise bei Temperaturen von 10 °C bis 80 °C härtbar sind, enthaltend
A) mindestens eine Vernetzerkomponente bestehend aus mindestens einem aliphatischen, cycloaliphatischen und/oder (cyclo)aliphatischen Di- oder Polyisocyanat mit einer NCO-Funktionalität von 2 - 6, wobei mindestens 90 Mol-% der ursprünglich vorhandenen freien Isocyanatgruppen des Di- oder Polyisocyanats mit mindestens einem sekundären Aminosilan mit der allgemeinen Formel I umgesetzt sind 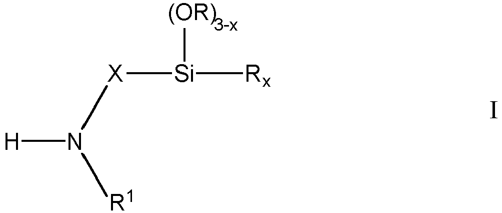 mit 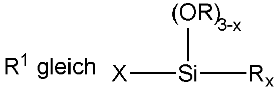 oder R,
   worin R gleichzeitig oder unabhängig voneinander Alkyl, Cyloalkyl, Aryl oder Aralkyl mit nicht mehr als 10 Kohlenstoffatomen bedeutet, wobei die Kohlenstoffkette durch nicht benachbarte Sauerstoffatome, Schwefelatome, oder NRₐ-Gruppen mit Rₐ = Alkyl, Cycloalkyl, Aryl oder Aralkyl, mit nicht mehr als 10 Kohlenstoffatomen unterbrochen sein kann und X gleichzeitig oder unabhängig voneinander lineare oder verzweigte und/oder cyclische Kohlenwasserstoffreste mit nicht mehr als 20, insbesondere 2 bis 20, Kohlenstoffatomen sind, mit x = 0 bis 2,
B) optional eine oder mehrere Bindemittelkomponenten,
C) von 0,05 bis 5 Gew.-% mindestens eines Katalysators ausgewählt aus
C1) mindestens einer organischen Carbonsäure mit einem Schmelzpunkt von mindestens 60 °C und/oder
C2) mindestens einem Tetraalkylammoniumcarboxylat,
D) optional Hilfsstoffe und/oder Zusatzstoffe,
E) optional organische Lösemittel.

Bei den erfindungsgemäßen Beschichtungsmitteln handelt es sich um nicht wässrige Systeme. Nicht wässrig im Sinne der vorliegenden Erfindung meint einen Gehalt an Wasser im erfindungsgemäßen Beschichtungsmittel von nicht mehr als 3 Gew.-%, vorzugsweise nicht mehr als 1 Gew.-% bezogen auf das Beschichtungsmittel. Insbesondere bevorzugt ist das erfindungsgemäße Beschichtungsmittel frei von Wasser.

Die erfindungsgemäße Lösung der Aufgabe ist insofern überraschend, da der Fachmann auf Basis des Standes der Technik nicht erwarten konnte, dass die erfindungsgemäße Kombination von Katalysatorkomponente und Vernetzerkomponente zu Beschichtungsmitteln führt, die bereits bei niedrigen Temperaturen gehärtet werden können. Vielmehr wird der Fachmann auf Basis des Standes der Technik dazu angeleitet, derartige Beschichtungsmittel für höhere Härtungstemperaturen anzuwenden. Weiterhin überraschend ist, dass mit dem erfindungsgemäßen Beschichtungsmittel ein einfacher Zugang zu kratzfesten Beschichtungen ermöglicht wird, die auf andere Weisen nur schwer realisierbar sind.

Für den Fachmann völlig überraschend ist, dass ein erfindungsgemäßes Beschichtungsmittel eine Reaktivität und auch nach Aushärtung unter milden Bedingungen ein Eigenschaftsprofil zeigt, das dem Industriestandard, den 2K-PUR-Lacken, ebenbürtig ist.

Die Vernetzerkomponente A) besteht aus mindestens einem aliphatischen, cycloaliphatischen und/oder (cyclo)aliphatischen Di- oder Polyisocyanat, mit einer NCO-Funktionalität von 2 - 6, wobei mindestens 90 Mol-%, bevorzugt > 95 Mol-% der ursprünglich vorhandenen freien Isocyanatgruppen des Di- oder Polyisocyanats mit mindestens einem sekundären Aminosilan der Formel I umgesetzt sind 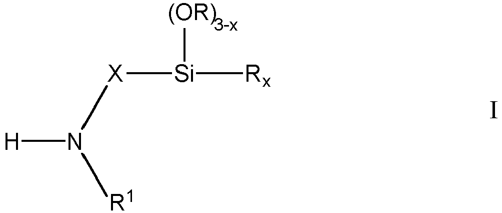 mit 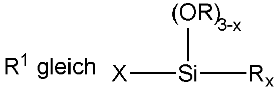 oder R,
worin R gleichzeitig oder unabhängig voneinander Alkyl, Cyloalkyl, Aryl oder Aralkyl mit nicht mehr als 10 Kohlenstoffatomen bedeutet, wobei die Kohlenstoffkette durch nicht benachbarte Sauerstoffatome, Schwefelatome, oder NRₐ-Gruppen mit Rₐ = Alkyl, Cycloalkyl, Aryl oder Aralkyl, mit nicht mehr als 10 Kohlenstoffatomen unterbrochen sein kann und X gleichzeitig oder unabhängig voneinander lineare oder verzweigte und/oder cyclische Kohlenwasserstoffreste mit nicht mehr als 20, insbesondere 2 bis 20, Kohlenstoffatomen sind, mit x = 0 bis 2,

Das eingesetzte Di- oder Polyisocyanat der Komponente A) weist eine (mittlere) NCO-Funktionalität von 2-6 auf, bevorzugt von 2 bis 4 auf.

Die erfindungsgemäß eingesetzten Di- oder Polyisocyanate können aus beliebigen, aliphatischen, cycloaliphatischen und/oder (cyclo)aliphatischen Di- oder Polyisocyanaten bestehen. Unter (cyclo)aliphatischen Diisocyanaten versteht der Fachmann in einem Molekül gleichzeitig cyclisch und aliphatisch gebundene NCO-Gruppen, wie es z. B. beim Isophorondiisocyanat der Fall ist. Demgegenüber versteht man unter cycloaliphatischen Diisocyanaten solche, die nur direkt am cycloaliphatischen Ring gebundene NCO-Gruppen aufweisen, z. B. Diisocyanatodicyclohexylmethan (H₁₂MDI).

Geeignete aliphatische Di- oder Polyisocyanate besitzen vorteilhafter Weise 3 bis 16 Kohlenstoffatome, vorzugsweise 4 bis 12 Kohlenstoffatome, im linearen oder verzweigten Alkylenrest. Geeignete cycloaliphatische oder (cyclo)aliphatische Diisocyanate weisen vorteilhafterweise 4 bis 18 Kohlenstoffatome, vorzugsweise 6 bis 15 Kohlenstoffatome, im Cycloalkylenrest auf.
Beispiele geeigneter Di- oder Polyisocyanate sind Cyclohexandiisocyanat, Methylcyclohexandiisocyanat, Ethylcyclohexandiisocyanat, Propylcyclohexandiisocyanat, Methyldiethylcyclohexandiisocyanat, Propandiisocyanat, Butandiisocyanat, Pentandiisocyanat, Hexandiisocyanat, Heptandiisocyanat, Octandiisocyanat, Nonandiisocyanat, Nonantriisocyanat, wie 4-Isocyanatomethyl-1,8-octandiisocyanat (TIN), Dekandi- und triisocyanat, Undekandi- und -triisocyanat, Dodecandi- und -triisocyanate.

Bevorzugt ist das mindestens eine aliphatische, cycloaliphatische und/oder (cyclo)aliphatische Di- oder Polyisocyanat ausgewählt aus Isophorondiisocyanat (IPDI), Hexamethylendiisocyanat (HDI), Diisocyanatodicyclohexylmethan (H₁₂MDI), 2-Methylpentandiisocyanat (MPDI), 2,2,4-Trimethylhexamethylendiisocyanat/2,4,4-Trimethylhexamethylendiisocyanat (TMDI) und/oder α,α,α',α'-Tetramethyl-meta-xylylendiisocyanat (TMXDI). Insbesondere bevorzugt werden IPDI, HDI, TMDI und/oder H₁₂MDI eingesetzt, wobei IPDI, H₁₂MDI und/oder HDI ganz besonders bevorzugt sind.

Ebenfalls geeignet sind 4-Methyl-cyclohexan-1,3-diisocyanat, 2-Butyl-2-ethylpentamethylen-diisocyanat, 3(4)-Isocyanatomethyl-1-methylcyclohexylisocyanat, 2-Isocyanatopropylcyclohexylisocyanat, 2,4'-Methylenbis(cyclohexyl)diisocyanat und/oder 1,4-Diisocyanato-4-methyl-pentan.

Im Falle einer NCO-Funktionalität von größer als zwei werden vorzugsweise Polyisocyanate, allein oder in Mischungen, eingesetzt, die beispielweise durch Trimerisierung, Dimerisierung, Urethan-, Biuret- oder Allophanatbildung sowie durch Abmischungen der Polyisocyanate mit Monomeren hergestellt werden. Derartige Polyisocyanate oder Polyisocyanat/Monomer-Gemische können gegebenenfalls mit Di- oder polyfunktionellen, H-aciden Komponenten, wie z. B. Di- oder Polyolen und/oder Di- oder Polyaminen, zusätzlich kettenverlängert oder verzweigt sein.

Weiterhin werden vorzugsweise oligomere oder polymere Di- oder Polyisocyanate verwendet, die sich aus den genannten Di- oder Polyisocyanaten oder deren Mischungen durch Verknüpfung mittels Urethan-, Allophanat-, Harnstoff-, Biuret-, Uretdion-, Amid-, Isocyanurat-, Carbodiimid-, Uretonimin-, Oxadiazintrion- oder Iminooxadiazindion-Strukturen herstellen lassen. Besonders geeignet sind Isocyanurate, insbesondere aus IPDI und/oder HDI.

Im Rahmen der vorliegenden Erfindung können beliebige Gemische der vorab beschriebenen Di- oder Polyisocyanate eingesetzt werden.

Die Modifizierung der eingesetzten Di- oder Polyisocyanate zur Vernetzerkomponente A) erfolgt durch Umsetzung von Di- oder Polyisocyanaten mit sekundären Aminosilanen mit der allgemeinen Formel I 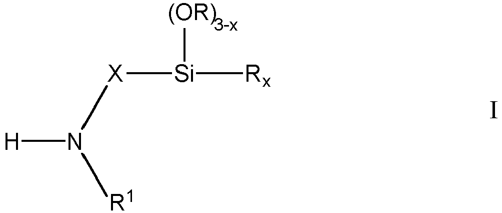 mit 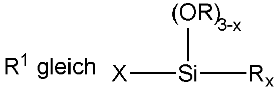 oder R,
worin R gleichzeitig oder unabhängig voneinander Alkyl, Cyloalkyl, Aryl oder Aralkyl mit nicht mehr als 10 Kohlenstoffatomen, insbesondere 1 bis 10 Kohlenstoffatomen, bedeutet, wobei die Kohlenstoffkette durch nicht benachbarte Sauerstoffatome, Schwefelatome, oder NRₐ₋Gruppen mit Rₐ = Alkyl, Cycloalkyl, Aryl oder Aralkyl, mit nicht mehr als 10 Kohlenstoffatomen, insbesondere 1 bis 10 Kohlenstoffatomen, unterbrochen sein kann und X gleichzeitig oder unabhängig voneinander lineare oder verzweigte und/oder cyclische Kohlenwasserstoffreste mit nicht mehr als 20, insbesondere 2 bis 20, Kohlenstoffatomen sind, mit x = 0 bis 2.

Dabei werden mindestens 90 Mol-%, bevorzugt > 95 Mol-%, der ursprünglich vorhandenen freien Isocyanatgruppen des Di- oder Polyisocyanats mit dem mindestens einen sekundären Aminosilan mit der allgemeinen Formel I umgesetzt.

Bevorzugte Verbindungen der allgemeinen Formel I sind insbesondere ausgewählt aus N,N-Bis-(3-trimethoxysilylpropyl)-amin, N,N-Bis-(3-triethoxysilylpropyl)-amin, N,N-Bis-(3-tri-i-propoxysilylpropyl)-amin. N-Butyl-N-(3-trimethoxysilylpropyl)-amin und/oder N-Butyl-N-(3-triethoxysilylpropyl)-amin.

Die Umsetzung der beiden Verbindungen zur Herstellung der Vernetzerkomponente A) erfolgt in flüssiger Phase, d. h. gegebenenfalls unter Mitverwendung von in der PUR-Technologie üblichen, aprotischen Lösemitteln, bei Temperaturen unterhalb von 130 °C, gegebenenfalls unter Mitverwendung von Katalysatoren und/oder Stabilisatoren.
Prinzipiell ist die Umsetzung von Polyisocyanaten mit sek. Aminosilanen in EP 123640 beschrieben.

Eine Herstellungsvariante der Vernetzerkomponente A) besteht in der partiellen Umsetzung monomerer Diisocyanate mit den vorab beschriebenen Verbindungen der Formel I und nachfolgender Überführung in das Polyisocyanat durch Trimerisierung, Dimerisierung, Urethan-, Biuret- oder Allophanatbildung, mit anschließender destillativer Abtrennung von Restmonomeren, sofern erforderlich. Auch Gemische aus nicht-modifizierten Polyisocyanaten und vollständig umgesetzten Polyisocyanaten sind erfindungsgemäß, wenn in Summe mindestens 90 Mol-%, bevorzugt > 95 Mol-%, der ursprünglich vorhandenen freien Isocyanatgruppen des Di- oder Polyisocyanats des Gemisches mit dem mindestens einen sekundären Aminosilan mit der allgemeinen Formel I umgesetzt sind.

Der Anteil von A) in dem erfindungsgemäßen Beschichtungsmittel beträgt 20 bis 99,5 Gew.-%, bezogen auf das Beschichtungsmittel, insbesondere 30 bis 90 Gew.-%.

Weiterhin kann das erfindungsgemäße Beschichtungsmittel optional eine oder mehrere Bindemittel-Komponenten enthalten. Grundsätzlich eignen sich als Bindemittel-Komponenten alle dem Fachmann bekannten Arten von Bindemitteln, beispielsweise auch thermoplastische, das heißt nicht vernetzbare Bindemittel, die üblicherweise ein mittleres Molekulargewicht > 10000 g/mol aufweisen. Bevorzugt werden jedoch Bindemittel, die über reaktive funktionelle Gruppen mit aciden Wasserstoffatomen verfügen, eingesetzt. Geeignete Bindemittel der genannten Art weisen beispielsweise mindestens eine, bevorzugt jedoch zwei oder mehr Hydroxyl-gruppen auf. Weitere geeignete funktionelle Gruppen des Bindemittels sind beispielsweise Trialkoxysilan-Funktionalitäten.

Als Bindemittel mit funktionellen Gruppen werden bevorzugt Hydroxylgruppen-haltige Polymere, insbesondere Hydroxylgruppen-haltige Polyester, Polyether, Polyacrylate, Polycarbonate und Polyurethane mit einer OH-Zahl von 20 bis 500 mg KOH/g und einer mittleren Molmasse von 250 bis 6000 g/Mol eingesetzt. Besonders bevorzugt werden im Rahmen der vorliegenden Erfindung Hydroxylgruppen-haltige Polyester oder Polyacrylate mit einer OH-Zahl von 20 bis 150 mg KOH/g und einem mittleren Molekulargewicht von 500 bis 6000 g/mol als Bindemittelkomponenten eingesetzt.
Die Hydroxylzahl (OHZ) wird bestimmt nach DIN 53240-2.
Bei diesem Verfahren wird die Probe mit Essigsäureanhydrid in Gegenwart von 4-Dimethylaminopyridin als Katalysator umgesetzt, wobei die Hydroxylgruppen acetyliert werden. Dabei entsteht pro Hydroxylgruppe ein Molekül Essigsäure, während die anschließende Hydrolyse des überschüssigen Essigsäureanhydrids zwei Moleküle Essigsäure liefert. Der Verbrauch an Essigsäure wird titrimetrisch aus der Differenz zwischen Hauptwert und einem parallel durchzuführenden Blindwert ermittelt. Das Molekulargewicht wird bestimmt mittels Gelpermeationschromatographie (GPC). Die Charakterisierung der Proben erfolgte in Tetrahydrofuran als Eluent nach DIN 55672-1.

Als hydroxylgruppenhaltige (Meth)acryl-Copolymerisate können Harze mit einer Monomerzusammensetzung, wie sie z. B. in WO 93/15849 (S. 8, Zeile 25 bis S. 10, Zeile 5), oder auch in DE 195 29124 beschrieben sind, verwendet werden. Dabei sollte die durch anteilige Verwendung von (Meth)acrylsäure als Monomer einzustellende Säurezahl des (Meth)acryl-Copolymerisates 0 - 30, vorzugsweise 3 - 15 mg KOH/g betragen. Das zahlenmittlere Molgewicht (ermittelt durch Gelpermeationschromatographie gegen einen Polystyrolstandard) des (Meth)acryl-Copolymerisates beträgt vorzugsweise 2000-20000 g/mol, die Glasübergangstemperatur beträgt vorzugsweise - 40°C bis + 60 °C. Der durch anteilige Verwendung von Hydroxyalkyl(meth)acrylaten einzustellende Hydroxylgehalt der erfindungsgemäß zu verwendenden (Meth)acryl-Copolymerisate beträgt vorzugsweise 70 - 250 mg KOH/g, besonders bevorzugt 90 - 190 mg KOH/g.

Erfindungsgemäß geeignete Polyesterpolyole sind Harze mit einer Monomerzusammensetzung aus Di- und Polycarbonsäuren und Di- und Polyolen, wie sie z. B. in Stoye/Freitag, Lackharze, C. Hanser Verlag, 1996, S. 49 oder auch in WO 93/15849 beschrieben sind. Als Polyesterpolyole können auch Polyadditionsprodukte von Caprolacton an niedermolekulare Di- und Triole, wie sie z. B. unter der Bezeichnung CAPA® (Perstorp) erhältlich sind, eingesetzt werden. Das rechnerisch bestimmte zahlenmittlere Molgewicht beträgt vorzugsweise 500 - 5000 g/mol, besonders bevorzugt 800 - 3000 g/mol, die mittlere Funktionalität beträgt vorzugsweise 2,0 - 4,0, bevorzugt 2,0 - 3,5.

Als erfindungsgemäß zu verwendende urethan- und estergruppenhaltige Polyole kommen prinzipiell auch solche zum Einsatz, wie sie in EP 140 186 beschrieben sind. Bevorzugt werden urethan- und estergruppenhaltige Polyole, zu deren Herstellung HDI, IPDI, Trimethylhexamethylendiisocyanat (TMDI) oder (H₁₂-MDI) verwendet werden, eingesetzt. Das zahlenmittlere Molgewicht beträgt vorzugsweise 500-2000 g/mol, die mittlere Funktionalität liegt insbesondere im Bereich von 2,0 - 3,5.

Auch Trialkoxysilan-funktionelle Bindemittel eignen sich zur Verwendung als Komponente B, wobei jene mit einer mittleren Molmasse von 500 - 5000 g/mol bevorzugt sind. Derartige Harze können gewonnen werden durch Copolymerisation von Acrylat- oder Methacrylat-Monomeren mit acryl- oder methacryl-funktionellen Alkyl-Trialkoxysilan-Derivaten (z. B. Dynasylan® MEMO der Evonik Industries AG), wie sie zum Beispiel in WO 92/11328 beschrieben sind. Ein alternativer Syntheseweg besteht in der Derivatisierung von hydroxylgruppenhaltigen Polyethern, Polyestern, Polycarbonat-diolen oder Polyacrylaten mit Isocyanatopropyltrialkoxysilan, wie er beispielsweise in WO 2008/131715 in den Beispielen 3 und 4 beschrieben ist.

Selbstverständlich können auch Mischungen der vorab beschriebenen Bindemittel eingesetzt werden. Bevorzugte Bindemittel sind Hydroxylgruppen-haltige Polyester und Polyacrylate, allein oder in Mischungen.

Der Anteil von B) in dem erfindungsgemäßen Beschichtungsmittel beträgt insbesondere 0,1-80 Gew.-%, bezogen auf das Beschichtungsmittel, insbesondere 0,10 bis 60 Gew.-%.

Das Massenverhältnis der Komponente A) zu der Komponente B) beträgt in dem erfindungsgemäßen Beschichtungsmittel vorzugsweise 3:7 bis 7:3.

Weiterer wesentlicher Bestandteil der erfindungsgemäßen Beschichtungsmittel ist der mindestens eine Katalysator C) ausgewählt aus mindestens einer organischen Carbonsäure mit einem Schmelzpunkt von mindestens 60 °C (C1) und/oder mindestens einem Tetraalkylammoniumcarboxylat (C2).

Die Katalysatorkomponente C) ist in Mengen von 0,05 bis zu 5 Gew.-%, vorzugsweise 0,1 bis 3 %, bezogen auf das Beschichtungsmittel, in dem erfindungsgemäßen Beschichtungsmittel enthalten. Die genannten Mengen beziehen sich in Summe auf die Komponenten C1) und/oder C2).

Als Katalysatoren C1) kommen organische Carbonsäuren mit einem Schmelzpunkt von mindestens 60 °C, das heißt bei Raumtemperatur feste Verbindungen, zum Einsatz. Beispiele geeigneter Carbonsäuren sind insbesondere Salicylsäure, Benzoesäure, Zitronensäure, Phthalsäure, Terephthalsäure, Isophthalsäure, Dodecansäure, 1.12-Dodecandisäure und/oder Ascorbinsäure. Bevorzugt werden Salicylsäure, Zitronensäure oder Benzoesäure verwendet, wobei auch Mischungen der genannten Carbonsäuren eingesetzt werden können.

Als Katalysator C2) wird ein Tetraalkylammoniumcarboxylat eingesetzt. Beispiele hierfür sind Tetramethylammoniumformiat, Tetramethylammoniumacetat, Tetramethylammoniumpropionat, Tetramethylammoniumbutyrat, Tetramethylammonium-benzoat, Tetraethylammoniumformiat, Tetraethylammoniumacetat, Tetraethylammoniumpropionat, Tetraethylammoniumbutyrat, Tetraethylammoniumbenzoat, Tetrapropylammoniumformiat, Tetrapropylammoniumacetat, Tetrapropylammoniumpropionat, Tetrapropylammoniumbutyrat, Tetrapropylammoniumbenzoat, Tetrabutylammoniumformiat, Tetrabutylammoniumacetat, Tetrabutylammoniumpropionat, Tetrabutylammoniumbutyrat und/oder Tetrabutylammoniumbenzoat. Die genannten Tetraalkylammoniumcarboxylate können allein oder in Mischungen zugesetzt werden. Bevorzugt werden Tetraethylammoniumbenzoat und/oder Tetrabutylammoniumbenzoat eingesetzt.

Die Katalysatorkomponente C) in den erfindungsgemäßen Beschichtungsmitteln kann allein aus den oben genannten Alternativen C1) oder C2) bestehen, es können aber auch beliebige Mischungen der Katalysatoren C1) und C2) eingesetzt werden. Die Mischungsverhältnisse können zwischen 95:5 und 5:95 variieren (m/m).

Das erfindungsgemäße Beschichtungsmittel kann zusätzlich in der Lacktechnologie bekannte Hilfsstoffe und/oder Zusatzstoffe D) wie Stabilisatoren, Lichtschutzmittel, Katalysatoren, Füllstoffe, Pigmente, Verlaufsmittel oder Rheologiehilfsmittel, wie z. B. sog. "sag control agents", Mikrogele oder pyrogenes Siliciumdioxid, in typischen Konzentrationen enthalten. Falls erforderlich, können in der Komponente D) der erfindungsgemäßen Beschichtungsmittel auch in der Lacktechnologie übliche anorganische oder organische Farb- und/oder Effektpigmente eingearbeitet werden.

Die Komponente D) ist im Falle pigmentfreier, d. h. Klarlacksysteme, vorzugsweise in Mengen von 0,5 bis zu 8 Gew.-%, insbesondere 1 bis 6 %, bezogen auf das Beschichtungsmittel in dem erfindungsgemäßen Beschichtungsmittel enthalten. Pigmente und Füllstoffe können im Falle farbiger Beschichtungssysteme von 10-70 Gew.-%, bezogen auf das Beschichtungsmittel enthalten sein.

Weiterhin kann das erfindungsgemäße Beschichtungsmittel organische Lösemittel als Komponente E) enthalten. Geeignete Lösemittel sind z. B. Ketone, Alkohole, Ester oder Aromaten.

Die Komponente E) ist vorzugsweise in Mengen von 20 bis zu 70 Gew.-%, insbesondere 30 bis 60 Gew.-%, bezogen auf das Beschichtungsmittel, in dem erfindungsgemäßen Beschichtungsmittel enthalten. Der Gehalt orientiert sich an der einzustellenden Applikationsviskosität des Beschichtungsmittels.

Die Summe aller Anteile der Komponenten A) - E) ergibt 100 Gew.-%. Bevorzugt bestehen die erfindungsgemäßen Beschichtungsmittel aus den genannten Komponenten A) bis E).

Die Herstellung der erfindungsgemäßen Beschichtungsmittel erfolgt durch Mischung der vorab beschriebenen Komponenten. Das Mischen kann in dem Fachmann bekannten Mischern erfolgen, beispielsweise Rührbehältern, Dissolvern, Perlmühlen, Walzenstühlen, etc., aber auch kontinuierlich mittels Statikmischern

Gegenstand der vorliegenden Erfindung ist auch die Verwendung der erfindungsgemäßen nicht wässrigen Beschichtungsmittel, welche insbesondere bei Temperaturen von 10 °C bis 80 °C härtbar sind, enthaltend
A) mindestens eine Vernetzerkomponente bestehend aus mindestens einem aliphatischen, cycloaliphatischen und/oder (cyclo)aliphatischen Di- oder Polyisocyanat mit einer NCO-Funktionalität von 2-6, wobei mindestens 90 Mol-% der ursprünglich vorhandenen freien Isocyanatgruppen des Di- oder Polyisocyanats mit mindestens einem sekundärem Aminosilan mit der allgemeinen Formel I umgesetzt sind 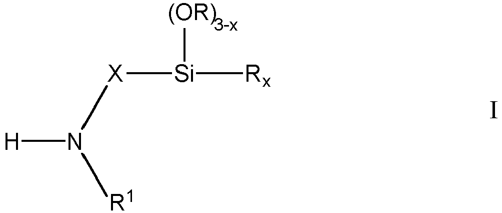 mit 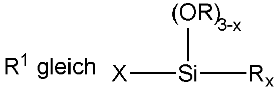 oder R,
   worin R gleichzeitig oder unabhängig voneinander Alkyl, Cyloalkyl, Aryl oder Aralkyl mit nicht mehr als 10 Kohlenstoffatomen bedeutet, wobei die Kohlenstoffkette durch nicht benachbarte Sauerstoffatome, Schwefelatome, oder NRₐ-Gruppen mit Rₐ = Alkyl, Cycloalkyl, Aryl oder Aralkyl, mit nicht mehr als 10 Kohlenstoffatomen unterbrochen sein kann und X gleichzeitig oder unabhängig voneinander lineare oder verzweigte und/oder cyclische Kohlenwasserstoffreste mit nicht mehr als 20, insbesondere 2 bis 20, Kohlenstoffatomen sind, mit x = 0 bis 2,
B) optional eine oder mehrere Bindemittelkomponenten,
C) von 0,05 bis 5 Gew.-% mindestens eines Katalysators ausgewählt aus
C1) mindestens einer organischen Carbonsäure mit einem Schmelzpunkt von mindestens 60 °C und/oder
C2) mindestens einem Tetraalkylammoniumcarboxylat,
D) optional Hilfsstoffe und/oder Zusatzstoffe,
E) optional organische Lösemittel
in Primern, Zwischenschichten, Decklacken oder Klarlacken.

Insbesondere ist Gegenstand die Verwendung der erfindungsgemäßen Beschichtungsmittel in nicht wässrigen, wärmehärtenden Klarlacken für die Automobilerstlackierung oder Autoreparaturlackierung.

Gegenstand der vorliegenden Erfindung sind ebenfalls Metallbeschichtungszusammensetzungen, insbesondere für Automobilkarossen, Motor- und Fahrräder, Gebäudeteile und Haushaltsgeräte, welche die erfindungsgemäßen Bindemittel enthalten.

Beschichtungszusammensetzungen für Glas-, Kunststoff- oder Holzbeschichtungen, insbesondere Klarlacke, enthaltend die erfindungsgemäßen Beschichtungsmittel sind ebenfalls Gegenstand der vorliegenden Erfindung.

Auch ohne weitere Ausführungen wird davon ausgegangen, dass ein Fachmann die obige Beschreibung im weitesten Umfang nutzen kann. Die bevorzugten Ausführungsformen und Beispiele sind deswegen lediglich als beschreibende, keinesfalls als in irgendeiner Weise limitierende Offenbarung aufzufassen.
Nachfolgend wird die vorliegende Erfindung anhand von Beispielen näher erläutert. Alternative Ausführungsformen der vorliegenden Erfindung sind in analoger Weise erhältlich.

### Beispiele:

Sofern nicht anderes angegeben, beziehen sich die Mengenangaben in Prozent in den Beispielen auf das Gewicht.

### Herstellung der Komponente A):

### Silanmodifiziertes Harz 1:

28,8 % VESTANAT® HT 2500/100 (HDI Trimer, lösemittelfrei, Evonik Industries AG) werden in 20,0 % Solvesso® 100 gelöst und unter N₂ auf 60 °C erwärmt. Das Heizbad wird entfernt und unter Rühren werden 51,2 % Dynasylan® 1124 (Bis(3-trimethoxysilyl-propyl)amin, Evonik Industries AG) so zugetropft, dass die Innentemperatur 55 - 65 °C nicht übersteigt. Nach beendeter Zugabe wird eine Stunde bei 60 °C nachgerührt und der NCO-Gehalt bestimmt.
Der NCO-Gehalt liegt bei < 0.1 %
Die Viskosität, gemessen bei 23 °C, beträgt 2.350 mPas
Der Feststoffgehalt beträgt 80 %.

### Silanmodifiziertes Harz 2:

31,2 % VESTANAT® T 1890/100 (IPDI Trimer, lösemittelfrei, Evonik Industries AG) werden in 25,0 % Solvesso® 100 gelöst und unter N₂ auf 60 °C erwärmt. Das Heizbad wird entfernt und unter Rühren werden 43,8 % Dynasylan® 1124 (Bis(3-trimethoxysilyl-propyl)amin, Evonik Industries AG) zugetropft, so dass die Innentemperatur 55 - 65 °C nicht übersteigt.

Nach beendeter Zugabe wird eine Stunde bei 60 °C nachgerührt und der NCO-Gehalt bestimmt.
Der NCO-Gehalt liegt < 0.1 %
Die Viskosität, gemessen bei 23 °C, beträgt 6200 mPas
Der Feststoffgehalt beträgt 75 %.

### Beispiel: Erfindungsgemäßes Beschichtungsmittel I-VI, Vergleichsbeispiele VII, VIII

Die Klarlacke wurden gemäß den in der Tabelle 1 angegebenen Mengenteilen formuliert.

Es wurden folgende Einsatzstoffe verwendet:
Setalux® 1767 VV-65: Polyacrylatpolyol, Nuplex Resins B.V., Festkörpergehalt 65% in Solvent Naphtha
Solvesso® 100: Aromatisches Lösemittel, ExxonMobil-Chemicals
Byk® 301: Polyethermodifiziertes Polydimethylsiloxan, Verlaufsmittel, Byk Chemie, D
Byketol® Special: Verlaufsmittel auf Basis hochsiedender Lösemittel sowie Polyethermodifiziertes Polydimethylsiloxan, Byk Chemie, Wesel, D.

Die Viskosität der Formulierungen betrug, bestimmt als Auslaufzeit im DIN-4-Becher bei 23 °C, ca. 20 Sekunden.

**Vergleichsbeispiel IX: 2K-PUR-Lack (Performancevergleich, nicht erfindungsgemäß)**

| | | |
|---|---|---|
| Formulierung : | Setalux® 1767 W-65 | 52,20 % |
| Formulierung: | VESTANAT® HT 2500 L | 19,60 % |
| Formulierung: | Buthylacetat | 12,50 % |
| Formulierung: | Xylol | 12,50 % |
| Formulierung: | Byketol® Spezial | 3,00 % |
| Formulierung: | Byk® 301 | 0,20 % |

Alle Lacke wurden im druckluftunterstützten Spritzauftrag mittels einer HVLP-Pistole (Fa. Sota, Kornwestheim, D) auf phosphatierten Stahlblechen (Gardobond® 26S 60 OC, Hersteller: Chemetall, D).) appliziert und bei Raumtemperatur ausgehärtet.

**Tabelle 1. Zusammensetzung der erfindungsgemäßen Beschichtungsmittel I-VI, sowie der nicht-erfindungsgemäßen Beschichtungsmittel VII, VIII**

| | Schmelz Punkt (°C) | I | II | III | IV | V | VI | VII | VIII |
|---|---|---|---|---|---|---|---|---|---|
| Setalux® 1767 VV-65 | | 35,63 % | 35,77 % | 35,47% | 35,44 % | 35,59 % | 35,75 % | 35,47 % | 35,47 % |
| Silanmodifiziertes Harz gem. Beispiel1 | | 20,27 % | 20,35 % | 20,18 % | 20,16 % | 20,25 % | 20,34 % | 20,18 % | 20,18 % |
| Silanmodifiziertes Harz gem. Beispiel 2 | | 9,26 % | 9,30 % | 9,22 % | 9,22 % | 9,25 % | 9,29 % | 9,22 % | 9,22 % |
| Solvesso® 100 | | 31,28 % | 31,41 % | 31,11 % | 31,12 % | 29,50 % | 31,40 % | 31,11 % | 31,11 % |
| Ethanol (Lösemittel für Katalysator) | | --- | --- | --- | 0,48 % | 1,96 % | --- | --- | --- |
| Byk ®301 | | 0,10 % | 0,10 % | 0,10 % | 0,10 % | 0,10 % | 0,10 % | 0,10 % | 0,10 % |
| Byketol® Special | | 3,00 % | 3,00 % | 3,00 % | 3,00 % | 3,00 % | 3,00 % | 3,00 % | 3,00 % |
| Salicylsäure | 158,3 | 0,46 % | --- | --- | --- | --- | --- | --- | --- |
| Tetraethylammoniumbenzoat (TEAB) | | --- | 0,07 % | --- | --- | --- | --- | --- | --- |
| Benzoesäure | 122 | --- | --- | 0,92 % | --- | --- | --- | --- | --- |
| Citronensäure | 153 | --- | --- | --- | 0,48 % | --- | --- | --- | --- |
| Phthalsäure | 191 | --- | --- | --- | --- | 0,35 % | --- | --- | --- |
| Tetrabutylammoniumacetat | | --- | --- | --- | --- | --- | 0,12 % | --- | --- |
| Neodecansäure (Vergleich) | -39 | --- | --- | --- | --- | --- | --- | 0,92 % | --- |
| 2-Ethylhexansäure (2-EHS) (Vergleich) | -59 | --- | --- | --- | --- | --- | --- | --- | 0,92 % |

**Tabelle 2: Härteentwicklung der applizierten Klarlacke**

| | I | II | III | IV | V | VI | VII (Vergleich) | VIII (Vergleich) | IX PUR |
|---|---|---|---|---|---|---|---|---|---|
| Katalysator | Salicylsäure | TEAB | BenzoeSäure | CitronenSäure | PhthalSäure | TBAAc | NeodecanSäure, | 2-EHS | |
| Pendelhärte [s] DIN EN ISO 1522 (König) n. 1d RT | 63 | 17 | 37 | 14 | 28 | 8 | klebrig | klebrig | 39 |
| Pendelhärte [s] DIN EN ISO 1522 (König) n. 7d RT | 92 | 81 | 99 | 104 | 103 | 76 | klebrig | klebrig | 118 |

| | | | | | | | | | |
|---|---|---|---|---|---|---|---|---|---|
| TEAB: Tetraethylammoniumbenzoat TBAAc: Tetrabutylammoniumacetat | | | | | | | | | |

Die Ergebnisse in Tabelle 2 zeigen, dass Carbonsäuren mit einem Schmelzpunkt unterhalb von 60 °C, wie 2-Ethylhexansäure oder Neodekansäure, keine ausreichende katalytische Aktivität zur Aushärtung der in Tab. 1 beschriebenen Lacke auf Basis der erfindungsgemäßen Bindemittel aus Beispiel 1 und 2 aufweisen. Erfindungsgemäße Carbonsäuren der Beispiele I, III, IV, V oder Tetraethylammoniumbenzoat (TEAB) und Tetrabuylammoniumacetat (TBAAc) führen zu einer Aktivität bzgl. Gelzeit und Härteentwicklung der Beschichtungen, wie sie mit 2K-PUR-Systemen (Vergleichsbeispiel in Tab. 2, erreicht werden können.

## Patentansprüche

1. Nicht wässrige Beschichtungsmittel, enthaltend
A) mindestens eine Vernetzerkomponente bestehend aus mindestens einem aliphatischen, cycloaliphatischen und/oder (cyclo)aliphatischen Di- oder Polyisocyanat mit einer NCO-Funktionalität von 2 - 6, wobei mindestens 90 Mol-% der ursprünglich vorhandenen freien Isocyanatgruppen des Di- oder Polyisocyanats mit mindestens einem sekundären Aminosilan mit der allgemeinen Formel I umgesetzt sind 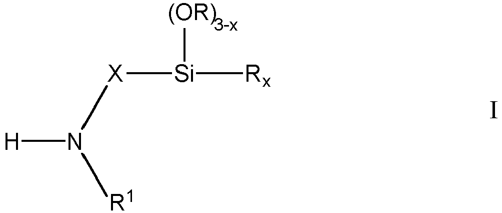 mit 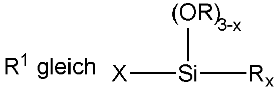 oder R,
worin R gleichzeitig oder unabhängig voneinander Alkyl, Cyloalkyl, Aryl oder Aralkyl mit nicht mehr als 10 Kohlenstoffatomen bedeutet, wobei die Kohlenstoffkette durch nicht benachbarte Sauerstoffatome, Schwefelatome, oder NRₐ-Gruppen mit Rₐ = Alkyl, Cycloalkyl, Aryl oder Aralkyl, mit nicht mehr als 10 Kohlenstoffatomen unterbrochen sein kann und X gleichzeitig oder unabhängig voneinander lineare oder verzweigte und/oder cyclische Kohlenwasserstoffreste mit nicht mehr als 20 Kohlenstoffatomen sind, mit x = 0 bis 2,
B) optional eine oder mehrere Bindemittelkomponente,
C) von 0,05 bis 5 Gew.-% mindestens eines Katalysators ausgewählt aus
C1) mindestens einer organischen Carbonsäure mit einem Schmelzpunkt von mindestens 60 °C und/oder
C2) mindestens einem Tetraalkylammoniumcarboxylat,
D) optional Hilfsstoffe und/oder Zusatzstoffe,
E) optional organische Lösemittel.

2. Beschichtungsmittel gemäß Anspruch 1, **dadurch gekennzeichnet, dass** sie bei Temperaturen im Bereich von 10 °C bis 80 °C härtbar sind.

3. Beschichtungsmittel gemäß Anspruch 1 oder 2, **dadurch gekennzeichnet, dass** der Anteil von A) 20 - 99,5 Gew.-%, bezogen auf das Beschichtungsmittel, beträgt.

4. Beschichtungsmittel gemäß einem oder mehreren der Ansprüche 1 bis 3, **dadurch gekennzeichnet, dass** der Anteil von B) 0,1 - 80 Gew.-%, bezogen auf das Beschichtungsmittel, beträgt.

5. Beschichtungsmittel gemäß einem oder mehreren der Ansprüche 1 bis 4, **dadurch gekennzeichnet, dass** das mindestens eine aliphatische und/oder cycloaliphatische Polyisocyanat ausgewählt ist aus Isophorondiisocyanat , Hexamethylendiisocyanat, Diisocyanatodicyclohexylmethan , 2-Methylpentandiisocyanat, 2,2,4-Trimethylhexamethylen-diisocyanat/2,4,4-Trimethylhexamethylendiisocyanat und/oder α,α,α',α'-Tetramethyl-meta-xylylendiisocyanat.

6. Beschichtungsmittel gemäß einem oder mehreren der Ansprüche 1 bis 5, **dadurch gekennzeichnet, dass** die Verbindungen der allgemeinen Formel I ausgewählt sind aus N,N-Bis-(3-trimethoxysilylpropyl)-amin, N,N-Bis-(3-triethoxysilylpropyl)-amin, N,N-Bis-(3-tri-i-propoxysilylpropyl)-amin. N- Butyl-N-(3-trimethoxysilylpropyl)-amin und/oder N-Butyl- N-(3-triethoxysilylpropyl)-amin.

7. Beschichtungsmittel gemäß einem oder mehreren der Ansprüche 1 bis 6, **dadurch gekennzeichnet, dass** als Komponente B) Hydroxylgruppen-haltige Polyester, Polyether, Polyacrylate, Polycarbonate und Polyurethane mit einer OH-Zahl von 20 bis 500 mg KOH/g und einer mittleren Molmasse von 250 bis 6000 g/Mol eingesetzt werden.

8. Beschichtungsmittel gemäß einem oder mehreren der Ansprüche 1 bis 6, **dadurch gekennzeichnet, dass** als Komponente B) Trialkoxysilan-funktionelle Bindemittel eingesetzt werden.

9. Beschichtungsmittel gemäß einem oder mehreren der Ansprüche 1 bis 8, **dadurch gekennzeichnet, dass** die Komponente C1) ausgewählt ist aus Salicylsäure, Benzoesäure, Zitronensäure, Phthalsäure, Terephthalsäure, Isophthalsäure, Dodecansäure, 1.12-Dodecandisäure und/oder Ascorbinsäure.

10. Beschichtungsmittel gemäß einem oder mehreren der Ansprüche 1 bis 9, **dadurch gekennzeichnet, dass** die Komponente C2) ausgewählt ist aus Tetramethylammoniumformiat, Tetramethylammoniumacetat, Tetramethylammoniumpropionat, Tetramethylammoniumbutyrat, Tetramethylammonium-benzoat, Tetraethylammoniumformiat, Tetraethylammoniumacetat, Tetraethylammoniumpropionat, Tetraethylammoniumbutyrat, Tetraethylammoniumbenzoat, Tetrapropylammoniumformiat, Tetrapropylammoniumacetat, Tetrapropylammoniumpropionat, Tetrapropylammoniumbutyrat, Tetrapropylammoniumbenzoat, Tetrabutylammoniumformiat, Tetrabutylammoniumacetat, Tetrabutylammoniumpropionat, Tetrabutylammoniumbutyrat und/oder Tetrabutylammoniumbenzoat.

11. Verwendung der Beschichtungsmittel gemäß einem oder mehreren der Ansprüche 1 bis 10 in Primern, Zwischenschichten, Decklacken oder Klarlacken.

12. Metallbeschichtungszusammensetzungen und Beschichtungszusammen-setzungen für Glas-, Kunststoff- oder Holzbeschichtungen enthaltend Beschichtungsmittel gemäß einem oder mehreren der Ansprüche 1 bis 10.

## Claims

1. Non-aqueous coating materials comprising
A) at least one crosslinker component consisting of at least one aliphatic, cycloaliphatic and/or (cyclo)aliphatic diisocyanate or polyisocyanate having an NCO functionality of 2-6, at least 90 mol% of the free isocyanate groups originally present in the diisocyanate or polyisocyanate having undergone reaction with at least one secondary aminosilane having the general formula I 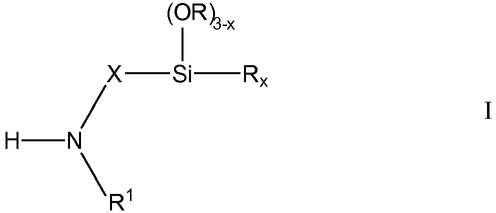 where
R¹ is 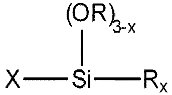 or R,
wherein R simultaneously or independently at each occurrence denotes alkyl, cycloalkyl, aryl or aralkyl having not more than 10 carbon atoms, it being possible for the carbon chain to be interrupted by non-adjacent oxygen atoms, sulphur atoms, or NRₐ groups with Rₐ = alkyl, cycloalkyl, aryl or aralkyl, having not more than 10 carbon atoms, and Xs simultaneously or independently of one another are linear or branched and/or cyclic hydrocarbon radicals having not more than 20 carbon atoms, with x = 0 to 2,
B) optionally one or more binder components,
C) from 0.05 to 5 wt.% of at least one catalyst selected from
C1) at least one organic carboxylic acid having a melting point of at least 60°C and/or
C2) at least one tetraalkylammonium carboxylate,
D) optionally auxiliaries and/or adjuvants,
E) optionally organic solvents.

2. Coating materials according to Claim 1, **characterized in that** they are curable at temperatures in the range from 10°C to 80°C.

3. Coating materials according to Claim 1 or 2, **characterized in that** the fraction of A) is 20-99.5 wt.%, based on the coating material.

4. Coating materials according to one or more of Claims 1 to 3, **characterized in that** the fraction of B) is 0.1-80 wt.%, based on the coating material.

5. Coating materials according to one or more of Claims 1 to 4, **characterized in that** the at least one aliphatic and/or cycloaliphatic polyisocyanate is selected from isophorone diisocyanate, hexamethylene diisocyanate, diisocyanatodicyclohexylmethane, 2-methylpentane diisocyanate, 2,2,4-trimethylhexamethylene diisocyanate/2,4,4-trimethylhexamethylene diisocyanate and/or α,α,α',α'-tetramethyl-meta-xylylene diisocyanate.

6. Coating materials according to one or more of Claims 1 to 5, **characterized in that** the compounds of the general formula I are selected from N,N-bis(3-trimethoxysilylpropyl)amine, N,N-bis(3-triethoxysilylpropyl)amine, N,N-bis(3-triisopropoxysilylpropyl)amine, N-butyl-N-(3-trimethoxysilylpropyl)amine and/or N-butyl-N-(3-triethoxysilylpropyl)amine.

7. Coating materials according to one or more of Claims 1 to 6, **characterized in that** use is made as component B) of hydroxyl-containing polyesters, polyethers, polyacrylates, polycarbonates and polyurethanes having an OH number of 20 to 500 mg KOH/g and an average molar mass of 250 to 6000 g/mol.

8. Coating materials according to one or more of Claims 1 to 6, **characterized in that** use is made as component B) of trialkoxysilane-functional binders.

9. Coating materials according to one or more of Claims 1 to 8, **characterized in that** component C1) is selected from salicylic acid, benzoic acid, citric acid, phthalic acid, terephthalic acid, isophthalic acid, dodecanoic acid, 1,12-dodecanedioic acid and/or ascorbic acid.

10. Coating materials according to one or more of Claims 1 to 9, **characterized in that** component C2) is selected from tetramethylammonium formate, tetramethylammonium acetate, tetramethylammonium propionate, tetramethylammonium butyrate, tetramethylammonium benzoate, tetraethylammonium formate, tetraethylammonium acetate, tetraethylammonium propionate, tetraethylammonium butyrate, tetraethylammonium benzoate, tetrapropylammonium formate, tetrapropylammonium acetate, tetrapropylammonium propionate, tetrapropylammonium butyrate, tetrapropylammonium benzoate, tetrabutylammonium formate, tetrabutylammonium acetate, tetrabutylammonium propionate, tetrabutylammonium butyrate and/or tetrabutylammonium benzoate.

11. Use of the coating materials according to one or more of Claims 1 to 10 in primers, intermediate coats, topcoats or clearcoats.

12. Metal-coating compositions and coating compositions for glass coatings, plastics coatings or wood coatings, comprising coating materials according to one or more of Claims 1 to 10.

## Revendications

1. Agents de revêtement non aqueux, contenant :
A) au moins un composant de réticulation constitué par au moins un di- ou polyisocyanate aliphatique, cycloaliphatique et/ou (cyclo)aliphatique ayant une fonctionnalité NCO de 2 à 6, au moins 90 % en moles des groupes isocyanate libres initialement présents du di- ou polyisocyanate étant mis en réaction avec au moins un aminosilane secondaire de formule générale I 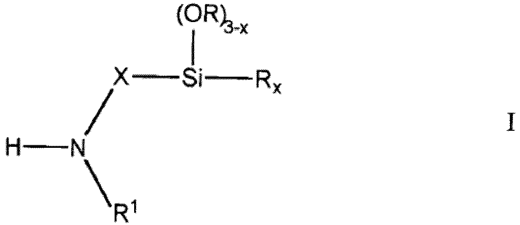 dans laquelle
R¹ représente 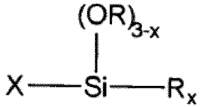 ou R,
les R signifiant simultanément ou indépendamment les uns des autres alkyle, cycloalkyle, aryle ou aralkyle ne contenant pas plus de 10 atomes de carbone, la chaîne carbonée pouvant être interrompue par des atomes d'oxygène, des atomes de soufre ou des groupes NRₐ non voisins avec Rₐ = alkyle, cycloalkyle, aryle ou aralkyle, ne contenant pas plus de 10 atomes de carbone, et les X signifiant simultanément ou indépendamment les uns des autres des radicaux hydrocarbonés linéaires ou ramifiés et/ou cycliques ne contenant pas plus de 20 atomes de carbone, avec x = 0 à 2,
B) éventuellement un ou plusieurs composants liants,
C) de 0,05 à 5 % en poids d'au moins un catalyseur choisi parmi
C1) au moins un acide carboxylique organique ayant un point de fusion d'au moins 60 °C et/ou
C2) au moins un carboxylate de tétraalkylammonium,
D) éventuellement des adjuvants et/ou des additifs,
E) éventuellement des solvants organiques.

2. Agents de revêtement selon la revendication 1, **caractérisés en ce qu'**ils sont durcissables à des températures dans la plage allant de 10 °C à 80 °C.

3. Agents de revêtement selon la revendication 1 ou 2, **caractérisés en ce que** la proportion de A) est de 20 à 99,5 % en poids, par rapport à l'agent de revêtement.

4. Agents de revêtement selon une ou plusieurs des revendications 1 à 3, **caractérisés en ce que** la proportion de B) est de 0,1 à 80 % en poids, par rapport à l'agent de revêtement.

5. Agents de revêtement selon une ou plusieurs des revendications 1 à 4, **caractérisés en ce que** ledit au moins un polyisocyanate aliphatique et/ou cycloaliphatique est choisi parmi le diisocyanate d'isophorone, le diisocyanate d'hexaméthylène, le diisocyanatodicyclohexylméthane, le diisocyanate de 2-méthylpentane, le diisocyanate de 2,2,4-triméthylhexaméthylène/diisocyanate de 2,4,4-triméthylhexaméthylène et/ou le diisocyanate d'α,α,α',α'-tétraméthyl-métaxylylène.

6. Agents de revêtement selon une ou plusieurs des revendications 1 à 5, **caractérisés en ce que** les composés de formule générale I sont choisis parmi la N,N-bis-(3-triméthoxysilylpropyl)-amine, la N,N-bis-(3-triéthoxysilylpropyl)-amine, la N,N-bis-(3-tri-i-propoxysilylpropyl)-amine, la N-butyl-N-(3-triméthoxysilylpropyl)-amine et/ou la N-butyl-N-(3-triéthoxysilylpropyl)-amine.

7. Agents de revêtement selon une ou plusieurs des revendications 1 à 6, **caractérisés en ce que** des polyesters, des polyéthers, des polyacrylates, des polycarbonates et des polyuréthanes contenant des groupes hydroxyle ayant un indice OH de 20 à 500 mg KOH/g et une masse molaire moyenne de 250 à 6 000 g/mol sont utilisés en tant que composant B).

8. Agents de revêtement selon une ou plusieurs des revendications 1 à 6, **caractérisés en ce que** des liants à fonction trialcoxysilane sont utilisés en tant que composant B).

9. Agents de revêtement selon une ou plusieurs des revendications 1 à 8, **caractérisés en ce que** le composant C1) est choisi parmi l'acide salicylique, l'acide benzoïque, l'acide citrique, l'acide phtalique, l'acide téréphtalique, l'acide isophtalique, l'acide décanoïque, l'acide 1,12-dodécanedioïque et/ou l'acide ascorbique.

10. Agents de revêtement selon une ou plusieurs des revendications 1 à 9, **caractérisés en ce que** le composant C2) est choisi parmi le formiate de tétraméthylammonium, l'acétate de tétraméthylammonium, le propionate de tétraméthylammonium, le butyrate de tétraméthylammonium, le benzoate de tétraméthylammonium, le formiate de tétraéthylammonium, l'acétate de tétraéthylammonium, le propionate de tétraéthylammonium, le butyrate de tétraéthylammonium, le benzoate de tétraéthylammonium, le formiate de tétrapropylammonium, l'acétate de tétrapropylammonium, le propionate de tétrapropylammonium, le butyrate de tétrapropylammonium, le benzoate de tétrapropylammonium, le formiate de tétrabutylammonium, l'acétate de tétrabutylammonium, le propionate de tétrabutylammonium, le butyrate de tétrabutylammonium et/ou le benzoate de tétrabutylammonium.

11. Utilisation des agents de revêtement selon une ou plusieurs des revendications 1 à 10 dans des couches primaires, des couches intermédiaires, des vernis supérieurs ou des vernis transparents.

12. Composition de revêtement de métaux et compositions de revêtement pour revêtements en verre, plastique ou bois, contenant des agents de revêtement selon une ou plusieurs des revendications 1 à 10.
